# FASCICULE DE BREVET EUROPEEN

(11) **EP 0 504 054 B1**
(45) Date de publication et mention de la délivrance du brevet: **28.12.1994**
(21) Numéro de dépôt: 92400649.7
(22) Date de dépôt: 12.03.1992
(51) Int. Cl.: B65B 39/00

(54) **Dispositif formant vanne, pour le raccordement étanche de deux conteneurs et conteneur prévu pour être accouplé à un tel dispositif**
Ventileinrichtung zur dichten Verbindung zwischen zwei Behältern sowie Behälter zur Verbindung mittels dieser Vorrichtung
Valve device for establishing a tight connection between two containers and container to be connected to such a device

(30) Priorité: 14.03.1991 FR 9103116
(43) Date de publication de la demande: 16.09.1992
(73) Titulaire: SNE LA CALHENE, F-78142 Velizy-Villacoublay Cedex (FR)
(72) Inventeur: Brossard, Jean-Pierre, F-78400 Chatou (FR); Cagnac, Dominique, F-91410 Dourdan (FR); Gérard, Claude, F-41100 La Ville Aux Clercs (FR)
(74) Mandataire: Poulin, Gérard

(56) Documents cités:
- EP-A- 0 088 735
- FR-A- 1 329 563
- US-A- 3 377 775

## Description

L'invention concerne un dispositif formant vanne, conçu pour être interposé entre deux conteneurs afin d'en assurer le raccordement étanche, sans rupture de confinement de ces conteneurs vis-à-vis de l'extérieur. Un tel dispositif peut notamment être utilisé pour assurer le transfert d'un produit tel qu'une poudre entre les deux conteneurs sans qu'à aucun moment ce produit ne soit en contact avec l'extérieur.

L'invention concerne également un conteneur d'un type particulier, conçu pour être accouplé sur le dispositif de raccordement étanche précité afin, là encore, de faciliter le transfert d'un produit entre les deux conteneurs raccordés par le dispositif.

Il est à noter que le mot "conteneur" désigne dans l'ensemble du texte toute enceinte étanche délimitant un volume clos, quelles que soient la forme et les dimensions données à ce volume.

Dans l'état actuel de la technique, le transfert des produits en poudre fabriqués dans les réacteurs pharmaceutiques dans les conteneurs servant au transport de ces produits s'effectue en interposant entre une trémie de décharge du réacteur et le conteneur un isolateur du type boîte à gants. Un opérateur, agissant par exemple à l'aide de gants intégrés dans la paroi de l'isolateur, manipule des systèmes de doubles portes afin d'établir ou d'interrompre la communication de l'isolateur d'une part avec le réacteur et d'autre part avec le conteneur. Lorsque les deux communications sont établies, l'opérateur met en place, toujours manuellement, un manchon souple permettant de relier directement la trémie de décharge du réacteur au conteneur, au travers de l'isolateur.

Cette solution connue a pour inconvénient de nécessiter l'utilisation d'un matériel coûteux, d'être longue à mettre en oeuvre et de ne pas être adaptée à une automatisation éventuelle.

Un dispositif selon le préambule de la revendication 1 est décrit dans le document EP-A-0088735. Le dispositif est notamment utilisé pour la remplissage d'un conteneur avec un liquide sous conditions stériles.

L'invention a précisément pour objet un dispositif de raccordement étanche particulièrement adapté, bien que non limité, au transfert de produits entre deux conteneurs, dont la conception originale lui permet de réduire de façon sensible le coût et le volume d'un tel dispositif, de diminuer le temps nécessaire à l'établissement de la communication entre les conteneurs, et d'autoriser une automatisation des manoeuvres.

Conformément à l'invention, ce résultat est obtenu au moyen d'un dispositif formant vanne, pour le raccordement étanche d'un conteneur amovible sur un conteneur fixe, comprenant
un caisson étanche apte à être fixé sur le conteneur fixe, pour communiquer avec lui par une première ouverture, le caisson présentant une deuxième ouverture située en vis-à-vis de la première ouverture, délimitée par une bride et normalement obturée par une porte de caisson, caractérisé en ce que:
- ladite bride et ladite porte sont aptes à coopérer par des moyens de raccordement avec une bride et une porte du conteneur amovible, pour former un système de transfert étanche à double porte ; et en ce qu'il comporte
- un chariot logé dans le caisson étanche et supportant la porte de caisson ;
- des moyens pour commander un déplacement à la fois de la porte de caisson et de la porte du conteneur amovible par rapport au chariot, parallèlement à l'axe des portes, entre une position fermée et une position ouverte ; et
- des moyens pour déplacer le chariot dans le caisson étanche entre une première position dans laquelle lesdites portes sont placées en face de la deuxième ouverture et une deuxième position dans laquelle ces portes sont effacées par rapport à la deuxième ouverture, lorsque lesdites portes sont en position ouverte.

Un dispositif ainsi conçu peut présenter un encombrement relativement réduit et n'impose aucune intervention autre que le raccordement des conteneurs sur les brides du caisson étanche. En effet, les différents mouvements d'ouverture de la porte et d'effacement de celle-ci peuvent être commandés à distance et automatisés de façon simple. Le coût et la durée des opérations de raccordement s'en trouvent sensiblement réduits.

Comme on l'a déjà mentionné, le dispositif selon l'invention est conçu notamment pour être utilisé afin de transférer un produit fluide tel qu'une poudre entre les deux conteneurs.

A cet effet et selon un premier mode de réalisation de l'invention, le chariot supporte de plus une canalisation extensible munie de moyens de commande d'allongement et de rétraction, cette canalisation étant alignée avec les ouvertures du caisson étanche lorsque le chariot occupe sa deuxième position.

Dans ce cas, le dispositif comprend avantageusement un circuit de commande automatique, actionnant successivement les moyens pour commander un déplacement de la porte par rapport au chariot, les moyens pour déplacer le chariot dans le caisson, et les moyens de commande d'allongement de la canalisation extensible.

De préférence, les moyens pour commander un déplacement de la porte parallèlement à son axe comprennent une pièce mobile portée par le chariot et coopérant avec la porte de caisson par un système de cames, des moyens de guidage de la porte de caisson parallèlement à un axe commun auxdites ouvertures, et des moyens pour déplacer ladite pièce par rapport au chariot, de façon à engendrer un déplacement de la porte le long des moyens de guidage, par l'intermédiaire du système de cames.

Dans le cas où le conteneur amovible qui doit être raccordé sur la deuxième ouverture ne comporte pas une bride et une porte prévues pour s'accoupler respectivement à la bride et à la porte du dispositif correspondant à la deuxième ouverture, un adaptateur peut être fixé sur ce conteneur amovible. Cet adaptateur comporte alors une bride tournante et une porte de conteneur aptes à coopérer avec les moyens de raccordement qui équipent la bride et la porte du caisson étanche.

Selon un deuxième mode de réalisation de l'invention, on accouple sur le dispositif un conteneur de transport d'un type particulier. Ce conteneur comprend une enveloppe extérieure pourvue d'une bride de conteneur délimitant une ouverture de conteneur normalement obturée par une porte de conteneur, et aptes à coopérer avec les moyens de raccordement de la bride et de la porte du caisson étanche, le conteneur de transport comprenant de plus une enveloppe intérieure comprenant une partie tubulaire adjacente à l'ouverture de conteneur, et des moyens pour déplacer l'enveloppe intérieure à l'intérieur de l'enveloppe extérieure, entre une position effacée dans laquelle la porte de conteneur peut être fermée, et une position de transfert, dans laquelle la partie tubulaire relie les deux ouvertures du dispositif de raccordement étanche.

On décrira maintenant, à titre d'exemple non limitatif, différents modes de réalisation de l'invention en se référant aux dessins annexés, dans lesquels :
- la figure 1 est une vue de face, en coupe partielle, illustrant l'accouplement d'un conteneur de transport sur une trémie d'un réacteur pharmaceutique à l'aide d'un dispositif de raccordement étanche conforme à l'invention ;
- la figure 2 est une vue comparable à la figure 1, qui illustre de façon très schématique les différentes fonctions remplies par le dispositif de raccordement étanche de la figure 1 ;
- la figure 3 est une vue en coupe illustrant à plus grande échelle et dans différentes positions le dispositif de raccordement étanche de la figure 1 ;
- la figure 4 est une vue en coupe comparable aux figures 1 et 2, représentant le dispositif de raccordement étanche dans la position qu'il occupe préalablement au transfert d'un produit en poudre au travers de ce dispositif ;
- la figure 5 est une vue en coupe du dispositif de raccordement étanche selon la ligne V-V de la figure 4 ;
- la figure 6 est une vue de face représentant schématiquement le montage inversé du dispositif de raccordement étanche illustré sur les figures précédentes, sur un support fixe lié à un conteneur de réception des produits en poudre et le raccordement sur ce dispositif d'une trémie amovible équipée d'un adaptateur ;
- la figure 7 est une vue en coupe à plus grande échelle représentant l'adaptateur utilisé sur la figure 6 ;
- la figure 8 illustre, dans un agencement comparable à celui de la figure 1, le raccordement d'un conteneur de transport sur le dispositif de transfert au moyen d'un adaptateur fixé sur le conteneur ; et
- la figure 9 illustre le raccordement d'un conteneur spécial adapté au transfert de produit en poudre, selon un deuxième mode de réalisation de l'invention, sur un dispositif de transfert simplifié dépourvu de canalisation extensible.

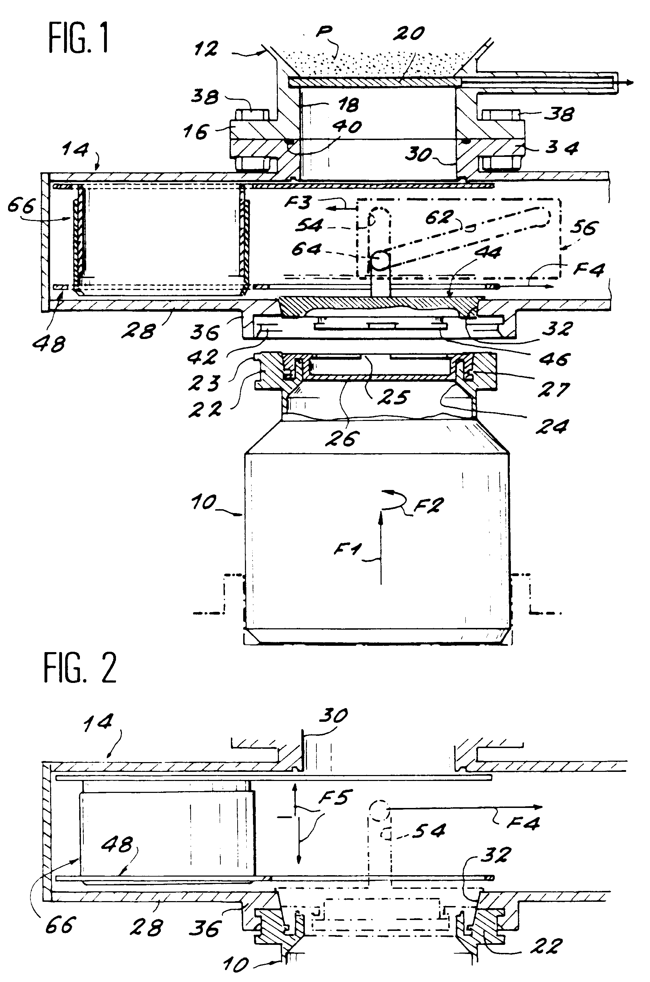

Sur les figures 1 à 5, on a illustré le raccordement d'un conteneur de transport 10 sous une trémie fixe 12 d'un réacteur pharmaceutique, par l'intermédiaire d'un dispositif de raccordement étanche conforme à l'invention, désigné de façon générale par la référence 14. Le dispositif de raccordement 14 est fixé dans ce cas à la trémie 12 et comporte des moyens permettant de raccorder le conteneur de transport 10 en dessous de cette trémie, d'ouvrir simultanément les portes obturant le conteneur de transport et le dispositif de raccordement, et d'effacer ces portes afin de relier la trémie et le conteneur par une canalisation extensible servant à protéger les parties mécaniques du dispositif 10 lors du transfert de la poudre.

Dans l'application particulière de l'invention illustrée sur les figures 1 à 5, la trémie 12 comporte à son extrémité inférieure une bride de trémie 16 délimitant intérieurement une ouverture 18, de section circulaire et d'axe vertical. Le fond de la trémie 12 est également équipé d'un organe de fermeture constitué d'un sas horizontal coulissant 20, commandé par un moteur (non représenté).

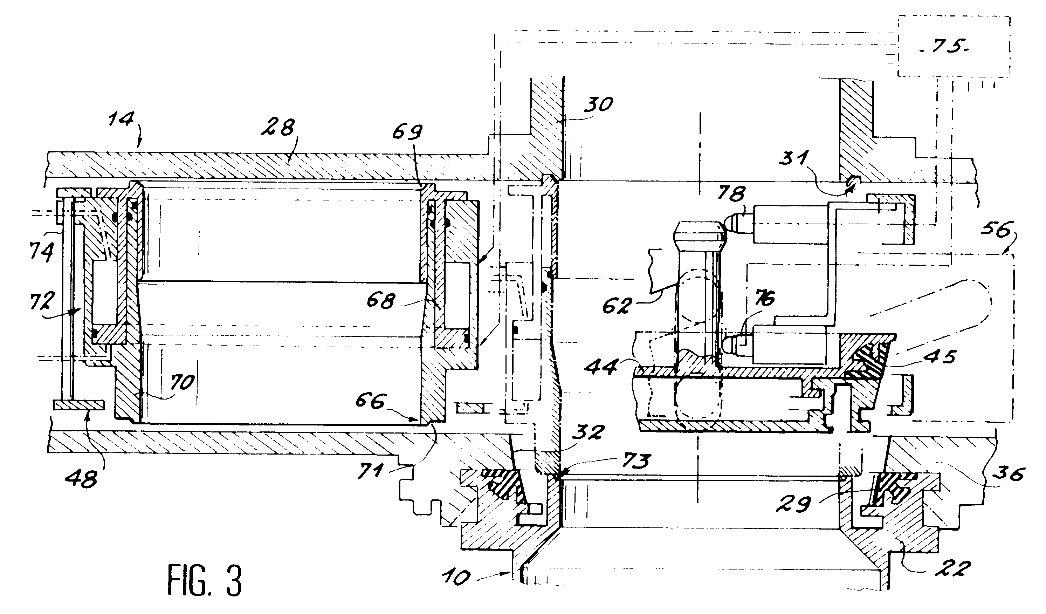

Par ailleurs, le conteneur de transport 10 comporte une bride de conteneur 22 délimitant intérieurement une ouverture circulaire 24, normalement fermée par une porte 26, par l'intermédiaire d'un système à baïonnette 27. En outre, la bride 22 et la porte 26 sont conçues pour coopérer avec une bride et une porte complémentaires, par des systèmes de liaison à baïonnette 23,25, pour constituer un dispositif de transfert à double porte, de type connu. Pour compléter ce dispositif, la bride 22 porte un joint d'étanchéité 29, à section triangulaire (figure 3), conçu pour coopérer simultanément avec la porte 26 et avec une bride complémentaire.

Le dispositif de raccordement étanche 14 comporte un caisson étanche 28, totalement clos, présentant deux faces opposées parallèles dans lesquelles sont formées deux ouvertures circulaires alignées en vis-àvis 30 et 32, délimitées respectivement par des brides 34 et 36.

La bride 34 est une bride en forme de disque, prévue pour être fixée directement sur la bride 16 de la trémie 12, par exemple au moyen de boulons 38. L'étanchéité entre les deux brides est assurée par exemple par un joint d'étanchéité annulaire 40 comprimé entre elles. En outre, les diamètres des ouvertures 18, 24 et 30 sont avantageusement les mêmes.

La bride 36 comporte quant à elle des moyens de raccordement tels qu'un système à baïonnette 42 avec lequel peut coopérer le système à baïonnette 23 de la bride 22 du conteneur de transport 10, sous l'effet d'une rotation de ce dernier autour de son axe. L'ouverture 32 délimitée par la bride 36 a un diamètre supérieur à celui des ouvertures 18, 30 et 24.

Une porte de caisson 44 obture normalement de façon étanche l'ouverture 32 délimitée par la bride 36. L'étanchéité est assurée par le caractère tronconique des surfaces en contact de la porte 44 et de l'ouverture 32. La porte 44 est également équipée, sur sa face tournée vers l'extérieur du caisson 28, de moyens de raccordement constitués par un système à baïonnette 46, avec lequel peut coopérer le système à baïonnette 25 de la porte 26 du conteneur 10, sous l'effet de la rotation précitée du conteneur 10. Comme l'illustre la figure 3, la porte 44 supporte un joint d'étanchéité 45, de section triangulaire, apte à être en appui étanche à la fois contre l'ouverture 32 formée dans la bride 36 et contre la porte du conteneur 26.

A la fin de la rotation du conteneur 10 assurant son raccordement sur le dispositif 14, la rotation de la porte 26 est stoppée sous l'effet de sa coopération avec la porte 44, ce qui a pour effet de déverrouiller la liaison à baïonnette 27 par laquelle la porte 26 était initialement fixée sur la bride 22. Cette caractéristique est habituelle dans les dispositifs de transfert étanches à double porte.

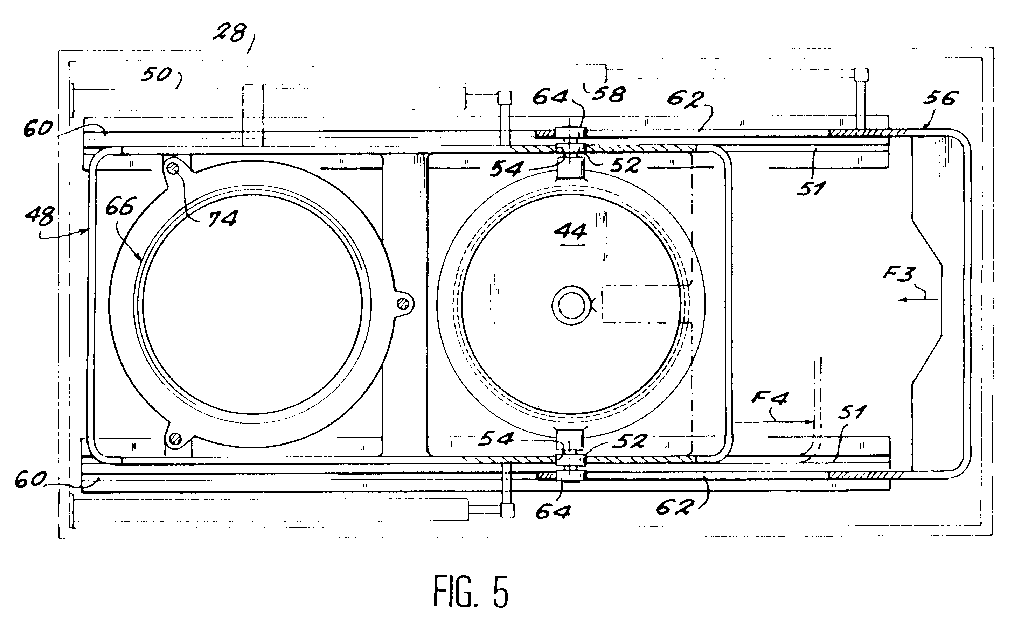

Le dispositif de raccordement étanche 14 selon l'invention comprend de plus, à l'intérieur du caisson étanche 14, un chariot 48 apte à se déplacer selon une direction perpendiculaire à l'axe commun aux ouvertures 30 et 32. Ce déplacement est commandé par deux vérins pneumatiques 50 (figure 5), logés à l'intérieur du caisson 28 et dont les extrémités sont accrochées respectivement sur la paroi de ce caisson et sur le chariot 48. Le guidage du chariot 48 lors de son déplacement à l'intérieur du caisson 28 est assuré par des glissières 51 (figure 5) montées sur les parois supérieure et inférieure de ce dernier.

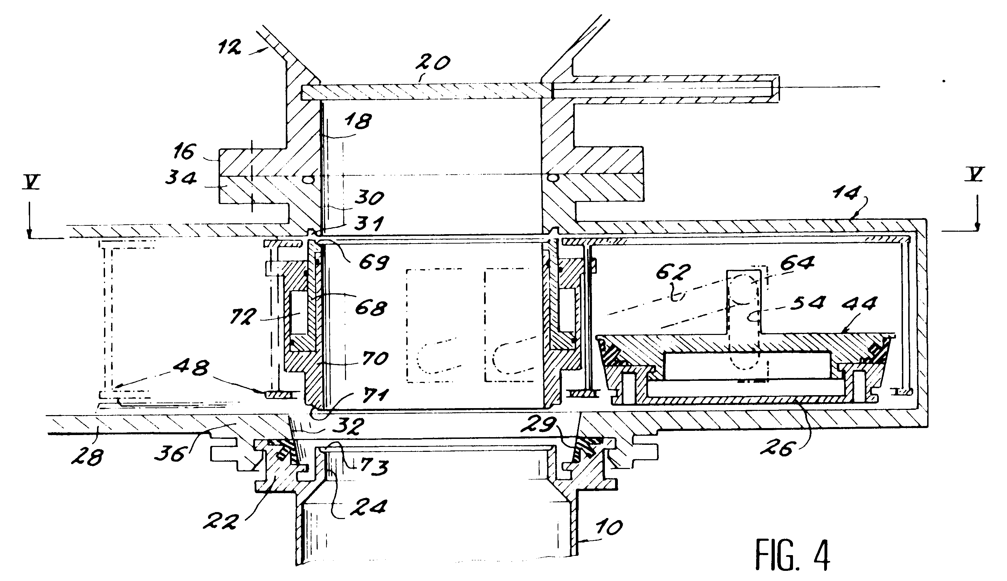

Comme l'illustrent notamment les figures 4 et 5, la porte 44 du caisson 28 supporte sur sa face tournée vers l'intérieur du caisson deux galets 52 dont l'axe commun est perpendiculaire à l'axe des ouvertures 30 et 32 et qui sont reçus dans des fentes 54 formées dans les parois latérales du chariot 48, parallèlement à l'axe de ces ouvertures. Cet agencement autorise un déplacement de la porte 44 selon l'axe commun aux ouvertures 30 et 32, tout en rendant la porte 44 solidaire du chariot 48 lors d'un déplacement de ce dernier commandé par les vérins 50.

Une pièce mobile 56, servant à commander l'ouverture et la fermeture de la porte 44, est également placée à l'intérieur du caisson 28. Comme le montre notamment la figure 5, cette pièce 56 présente en vue de dessus la forme d'un U et elle est montée dans le caisson 28 de façon à pouvoir se déplacer dans la même direction que le chariot 48, tout en étant reliée à ce dernier par un vérin pneumatique 58 permettant de commander un déplacement de la pièce 56 par rapport au chariot 48 selon cette direction. Le guidage de la pièce 56 selon cette direction est assuré par des glissières 60 formées, parallèlement aux glissières 51, à l'intérieur du caisson 28, sur les parois supérieure et inférieure de ce dernier.

Les deux branches parallèles de la pièce 56 en forme de U, qui s'étendent selon la direction de déplacement de cette pièce et du chariot 48, comportent chacune une fente 62, inclinée par rapport aux faces supérieure et inférieure du caisson 28 comme l'illustre la figure 4, de façon à former un système de cames dans lequel sont reçus deux galets 64 supportés par la porte 44 coaxialement aux galets 52, comme le montre la figure 5.

Dans le mode de réalisation du dispositif de raccordement étanche selon l'invention illustré sur les figures 1 à 5, le chariot 48 supporte également une canalisation extensible 66 dont l'axe est parallèle à celui des ouvertures 24 et 30. Comme l'illustrent plus en détail les figures 3 et 4, cette canalisation extensible 66 est montée dans le chariot 48 en un emplacement normalement décalé selon la direction de déplacement de ce dernier à l'intérieur du caisson 28, lorsque la porte 44 est en face des ouvertures 24 et 34. Ainsi, lorsque la porte 44 est ouverte sous l'action du vérin 58, la canalisation extensible 66 peut être amenée entre les ouvertures 30 et 32 pour en effectuer le raccordement.

Comme l'illustrent les figures 3 et 4, la canalisation extensible 66 comprend deux tronçons de canalisation 68 et 70 emmanchés l'un dans l'autre de façon télescopique en délimitant entre eux un vérin pneumatique 72. L'actionnement de ce vérin 72 permet soit d'amener la canalisation 66 dans sa position rétractée illustrée en trait plein sur la partie gauche de la figure 3, soit d'amener cette canalisation dans sa position allongée illustrée en traits mixtes sur la partie droite de la figure 3. Le tronçon inférieur 70 de la canalisation extensible 66, qui forme le cylindre du vérin 72, est monté coulissant par des colonnettes 74 (figure 3) sur le chariot 48, selon une direction orientée parallèlement à l'axe commun aux ouvertures 30 et 32. Le tronçon supérieur 68 de la canalisation extensible 66, qui constitue le piston du vérin 72, est monté sur le tronçon inférieur 70 de façon à pouvoir se déplacer dans la même direction.

Le diamètre intérieur de la canalisation extensible 66 est sensiblement égal à celui des ouvertures 18, 24 et 30 (figure 3).

La mise en oeuvre du dispositif de raccordement selon l'invention va à présent être décrite, dans le cadre de l'application illustrée sur les figures 1 à 5.

Initialement, le dispositif 14 est fixé sur la trémie 12 par les boulons 38 traversant les brides 16 et 34, comme illustré sur la figure 1. La porte 44 est alors fermée, ce qui implique que le chariot 48 se trouve dans une première position illustrée sur la figure 1, dans laquelle la porte 44 est alignée avec les ouvertures 30 et 32, et que la pièce 56 occupe la position illustrée schématiquement sur la figure 1, dans laquelle la porte 44 est appliquée de façon étanche dans l'ouverture 32 sous l'effet de la coopération des galets 64 avec les fentes inclinées 62.

Lorsque un produit en poudre fabriqué dans le réacteur auquel appartient la trémie 12 doit être évacué du réacteur, un conteneur 10 est accouplé à la bride 36 par un mouvement de translation (flèche F1) suivi d'un mouvement de rotation (flèche F2). Comme décrit précédemment, ce dernier mouvement de rotation a pour effet d'accoupler la bride 22 sur la bride 36, d'accoupler la porte 26 sur la porte 44 et de déverrouiller la porte 26 de la bride 22.

Lorsque cet accouplement est terminé, le dispositif de raccordement étanche selon l'invention peut être mis en oeuvre de façon entièrement automatique afin d'assurer rapidement la mise en communication de la trémie 12 avec le conteneur 10 sans rupture de leur confinement vis-à-vis de l'extérieur.

Dans un premier temps, le vérin 58 est actionné, afin de déplacer la pièce 56 par rapport au chariot 48 (flèche F3 sur les figures 1 et 5). Lors de ce déplacement, les fentes inclinées 62 se déplacent par rapport aux galets 64, ce qui a pour effet d'ouvrir la porte 44 en la déplaçant vers l'intérieur du caisson 28. En effet, le déplacement de la porte 44 est alors limité par la coopération des galets 52 avec les fentes 54 formées dans le chariot 48.

A la fin du déplacement de la pièce 56, la porte 44, ainsi que la porte 26 du conteneur qui en a été solidarisée lors du raccordement du conteneur 10, se trouvent donc dans une position ouverte, illustrée sur la partie droite de la figure 3, dans laquelle l'ensemble formé par les deux portes 44 et 26 est totalement effacé à l'intérieur du caisson 28.

Lorsque ce premier mouvement est terminé, le vérin 58 est stoppé et les deux vérins 50 sont à leur tour actionnés, ce qui a pour effet de déplacer simultanément, à l'intérieur du caisson 28, le chariot 48 portant la pièce 56 et les deux portes 44 et 26 (flèche F4 sur les figures 1 et 2). Ce déplacement fait passer le chariot 48 de sa première position dans laquelle la porte 44 était alignée avec les ouvertures 30 et 32 à sa seconde position, illustrée sur la figure 4, dans laquelle les portes 44 et 26 sont totalement effacées par rapport aux ouvertures 30 et 32.

Dans le mode de réalisation illustré sur les figures 1 à 5, cette deuxième position du chariot 48 se caractérise également par la venue de la canalisation extensible 66 dans le prolongement des ouvertures 30 et 32. Le vérin 72 est alors actionné de façon à commander l'allongement de la canalisation extensible 66 (flèches F5 sur la figure 2). Comme on la représenté en traits mixtes sur la partie droite de la figure 3, cet allongement est limité par la venue en appui d'une portée tronconique 69 formée sur l'extrémité supérieure du tronçon supérieur 68 contre une portée tronconique complémentaire 31 formée autour de l'ouverture 30 sur la face intérieure du caisson 28, et par la venue en appui d'une portée tronconique 71 formée sur l'extrémité inférieure du tronçon 70 contre une portée tronconique complémentaire 73 formée sur une partie tubulaire du conteneur 10 entourant l'ouverture 24.

Lorsque ces contacts sont obtenus, le produit en poudre P contenu dans la trémie 12 peut être transféré dans le conteneur 10 sans que le mécanisme contenu dans le caisson 28 puisse être pollué par ce produit en poudre.

Dans l'application illustrée sur les figures 1 à 5, ce transfert est réalisé par gravité, en ouvrant le sas 20 qui obture le fond de la trémie 12. Lorsqu'il est terminé, des opérations inverses des précédentes permettent de ramener les éléments contenus dans le dispositif de raccordement 14 dans les positions qu'ils occupaient initialement, après quoi le conteneur 10 peut être déconnecté de ce dispositif.

Grâce à l'utilisation du dispositif de raccordement étanche 14 selon l'invention, un transfert de produit en poudre peut donc être réalisé sans aucune rupture du confinement vis-à-vis de l'extérieur entre une trémie 12 et un conteneur de transport 10. Par rapport à la boîte à gants utilisée antérieurement pour remplir la même fonction, le dispositif de raccordement 14 est particulièrement simple, peu coûteux et peu encombrant, et il permet une mise en oeuvre rapide.

De plus, ce dispositif est particulièrement adapté pour pouvoir être mis en oeuvre de façon automatisée. A cet effet, il comporte avantageusement un circuit de commande automatique 75 (figure 3) qui commande successivement l'actionnement des vérins 58, 50 et 72 lorsqu'un premier organe de manoeuvre est actionné, consécutivement à l'accouplement du conteneur 10 sur le dispositif 14. La commande peut aussi être initiée automatiquement par la fermeture d'un microcontact indiquant que l'accouplement du conteneur est réalisé. Le circuit de commande automatique 75 permet aussi de ramener le dispositif 14 dans son état initial, lorsqu'un deuxième organe de commande est actionné.

Le début et la fin de l'actionnement de chacun des vérins 58, 50 et 72 sont commandés par le circuit 75 en réponse à des signaux délivrés par des microcontacts de fin de course. Ainsi et comme l'illustre la figure 3, deux microcontacts de fin de course 76 et 78 montés sur le chariot 48 indiquent au circuit de commande 75 respectivement la position fermée et la position ouverte de la porte 44. De façon comparable, des microcontacts (non représentés) sont montés dans le caisson 28, afin de détecter les première et deuxième positions du chariot 48 et des microcontacts (non représentés) sont montés dans le chariot 48 afin de détecter les états rétractés et allongés de la canalisation extensible 66.

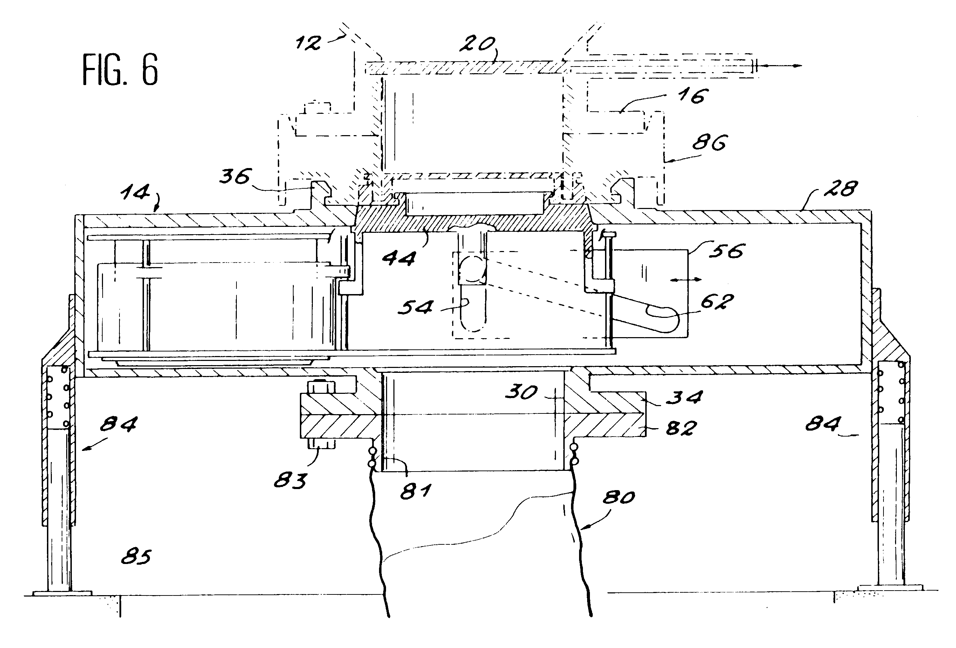

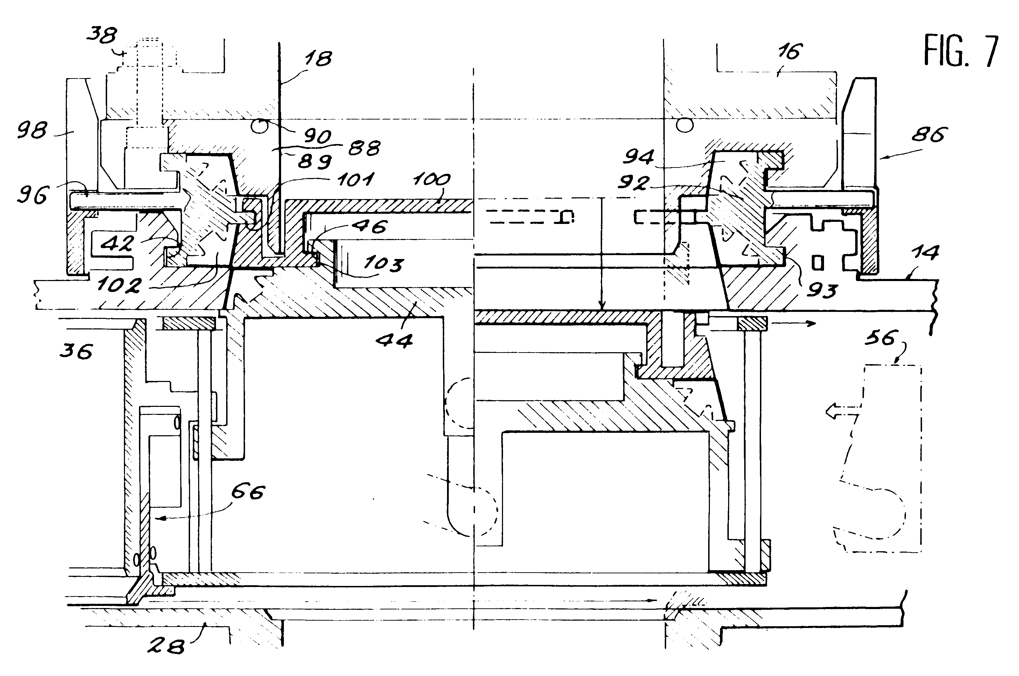

Comme l'illustrent les figures 6 et 7, le dispositif de transfert 14 selon l'invention peut aussi être utilisé en sens inverse, pour assurer le transfert d'un produit en poudre depuis une trémie mobile 12 dans un conteneur fixe (non représenté), relié par un manchon souple 80 à une bride 82 délimitant une ouverture circulaire 81, de même diamètre que l'ouverture 30. Dans ce cas, la bride 34 du dispositif 14 est tournée vers le bas et la bride 82 peut y être fixée par des boulons 83. Le caisson étanche 28 du dispositif 14 repose directement sur le sol 85 par des pieds 84 équipés d'amortisseurs permettant un certain débattement du dispositif 14 selon une direction verticale.

Etant donné que la trémie 12 comporte à son extrémité inférieure une bride 16 identique à celle qui a été décrite précédemment en se référant à la figure 1, il est nécessaire de fixer à cette bride un adaptateur 86 afin que la trémie 12 puisse être accouplée et désaccouplée à la bride 36, ainsi qu'à la porte 44 qui obture l'ouverture 32 délimitée par cette bride 36. Cet adaptateur 86 va être décrit plus en détail en se référant à la figure 7.

Comme l'illustre cette dernière figure, l'adaptateur 86 comprend une bague 88 qui est fixée à la bride 16 par des boulons 38, l'étanchéité étant assurée par un joint d'étanchéité annulaire 90 emprisonné entre la bague 88 et la bride 16. La bague 88 délimite une ouverture circulaire 89 dont le diamètre est égal à celui de l'ouverture 18 délimitée par la bride 16. Une bride tournante 92, supportée par la bague 88, coopère par un premier joint d'étanchéité 94 à section triangulaire avec une surface extérieure à section en forme de V de la bague 88. Des tiges 96, orientées radialement vers l'extérieur à partir de la bride tournante 92, permettent de solidariser en rotation cette dernière d'une bague de manoeuvre extérieure 98.

Une porte 100 coiffe une partie tubulaire de la bague 88 opposée à la bride 16 et coopère par une liaison à baïonnette 101 avec la bride tournante 92. Un deuxième joint d'étanchéité 102 à section triangulaire, porté par la bride tournante 92, est normalement en appui étanche sur la surface extérieure tronconique de la porte 100 et peut venir en appui étanche sur la bride 36 du dispositif 14.

En outre, la bride tournante 92 ainsi que la porte 100 sont aptes à coopérer par des liaisons à baïonnette 93 et 103 respectivement avec les liaisons à baïonnette 42 et 46 prévues sur la bride 36 et sur la porte 44 du dispositif de raccordement 14 conforme à l'invention, afin de permettre l'accouplement de la trémie mobile 12 sur ce dispositif 14, comme l'illustre la figure 7.

Plus précisément, cet accouplement est réalisé en déplaçant vers le bas la trémie 12, puis en commandant la rotation de la bride tournante 92 à l'aide de la bague de manoeuvre 98, ce qui a pour effet de verrouiller la bride 92 sur la bride 36, de verrouiller la porte 100 sur la porte 44, et de déverrouiller la porte 100 de la bride tournante 92.

Le dispositif de transfert 14, réalisé par ailleurs de la manière décrite précédemment, peut ensuite être mis en oeuvre pour permettre le transfert par gravité du produit en poudre de la trémie 12 dans le conteneur raccordé au manchon 80.

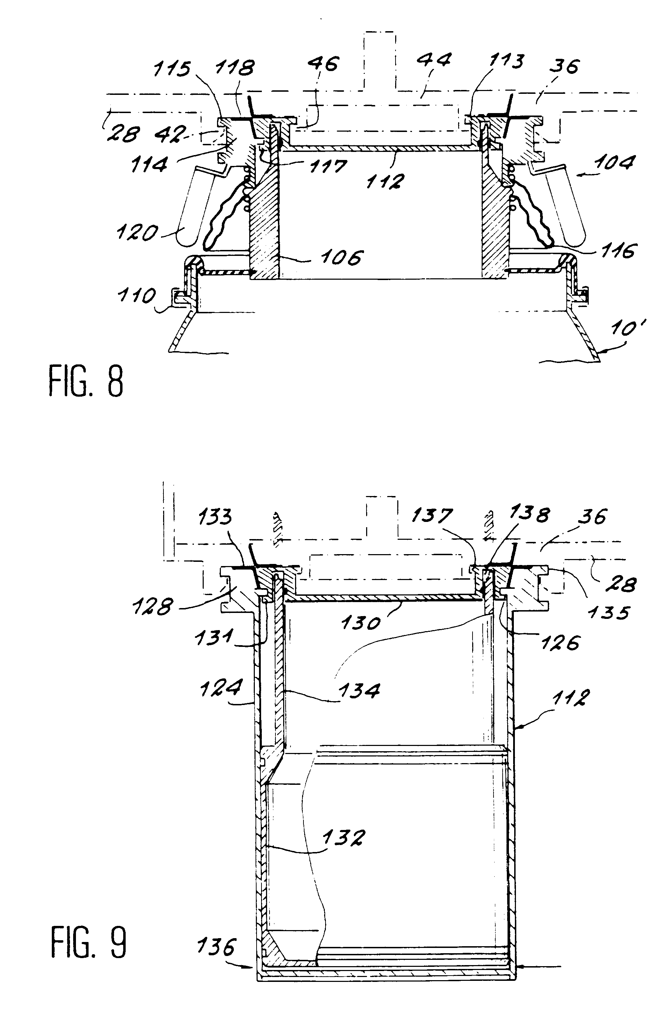

Comme on l'a représenté de façon schématique sur la figure 8, le dispositif de raccordement 14 conforme à l'invention peut aussi être utilisé, dans le même sens que sur les figures 1 à 5, pour assurer le transfert d'une poudre depuis une trémie fixe dans un conteneur de transport 10′, non adapté pour être directement accouplé sur la bride 36 du dispositif 14. Dans ce cas, on monte sur l'embouchure du conteneur 10′ un adaptateur 104.

Cet adaptateur 104 comprend un embout tubulaire 106 qui est fixé de façon étanche sur l'embouchure du conteneur 10′ par tout moyen approprié tel que, par exemple, une plaque annulaire 108 maintenue par un clip 110.

L'extrémité de l'embout tubulaire 106 est coiffée de façon étanche par une porte 112 conçue pour coopérer par une liaison à baïonnette 113 avec la liaison complémentaire 46 formée sur la porte 44 du dispositif 14. Une bride extérieure rotative 114 est montée autour de l'extrémité de la pièce tubulaire 106 et autour de la porte 112. La bride 114 coopère avec la porte 112 par une liaison à baïonnette 117. L'étanchéité entre la pièce tubulaire 106 et la bride rotative 114 est assurée par un manchon souple 116. Par ailleurs, l'étanchéité entre la bride rotative 114 et la porte 112 est assurée par un joint d'étanchéité 118 à section triangulaire qui est normalement en appui étanche contre la surface extérieure tronconique de la porte 112 et qui peut venir en appui étanche contre la bride 36 du dispositif 14 lorsque la bride rotative 114 est accouplée sur la liaison à baïonnette 42 de la bride 36 par une liaison complémentaire. La commande en rotation de la bride 114 est facilitée par des bras de manoeuvre 120 fixés sur cette bride.

Lorsque l'adaptateur 104 est monté sur le conteneur 10′, il est possible d'accoupler ce dernier sur le dispositif de raccordement 14 en effectuant successivement une translation du conteneur l'amenant en contact avec la bride 36, puis une rotation de la bride rotative 114. Comme dans les applications décrites précédemment, cette rotation a pour effet d'accoupler la bride 114 sur la bride 36, d'accoupler la porte 112 sur la porte 44 et de déconnecter la porte 112 de la bride 114. Des opérations de transfert peuvent ensuite être effectuée en actionnant le dispositif 14 de la manière décrite précédemment en se référant aux figures 1 à 5.

Sur la figure 9, on a représenté un autre mode de réalisation de l'invention, dans lequel le dispositif de transfert 14 est réalisé pour l'essentiel de la manière décrite précédemment en se référant aux figures 1 à 5, mais dans lequel la canalisation extensible est supprimée. Cette suppression est rendue possible par l'utilisation d'un conteneur 122 de conception particulière.

Ce conteneur 122 comprend, de façon classique, une enveloppe extérieure 124, par exemple de forme cylindrique, dont une extrémité présente une ouverture 126 délimitée par une bride 128. Toujours de façon classique, cette ouverture 126 est normalement obturée par une porte 130 qui coopère avec la bride 128 par une liaison à baïonnette 131. L'étanchéité est assurée par un joint d'étanchéité 133, à section triangulaire, monté dans la bride 128 et coopérant de façon étanche avec la porte 130 et avec la bride 36 du dispositif 14, lorsque le raccordement est réalisé. En outre, la bride 128 et la porte 130 sont dimensionnées de façon à pouvoir être accouplées respectivement sur les liaisons à baïonnette 42 et 46 de la bride 36 et de la porte 44 du dispositif de raccordement 14 par deux liaisons complémentaires 135 et 137.

Le conteneur 122 comprend de plus une enveloppe intérieure 132, par exemple de forme tubulaire, qui est montée de façon à pouvoir coulisser dans l'enveloppe intérieure 124, parallèlement à l'axe de l'ouverture 126. L'enveloppe intérieure 132 coopère avec l'enveloppe extérieure 124 de façon à former entre eux un vérin 136 permettant de commander le déplacement de l'enveloppe intérieure 132 entre une position normale, dans laquelle cette enveloppe est totalement rétractée à l'intérieur de l'enveloppe extérieure 124, et une position de transfert, dans laquelle, après enlèvement de la porte 130, une partie tubulaire 134 de l'enveloppe intérieure 132 assure le guidage du produit transféré depuis la trémie 12 jusqu'au conteneur 122, à l'intérieur du dispositif 14. Dans cette dernière position, une surface tronconique 138 formée à l'extrémité de la partie tubulaire 134 vient en appui contre la surface tronconique 31 formée dans la paroi du caisson 28, autour de l'ouverture 30.

Dans ce deuxième mode de réalisation de l'invention, aprés la mise en oeuvre du dispositif 14 ayant pour effet d'ouvrir les portes 44 et 130, puis de les effacer à l'intérieur du caisson 28 afin de dégager totalement le passage entre l'ouverture 30 et l'ouverture 126, le vérin 136 équipant le conteneur 122 est actionné de façon à amener la partie tubulaire 134 dans une position haute en considérant la figure 9. Le transfert du produit en poudre contenu dans la trémie 12 vers le conteneur 122 peut alors être effectué.

Bien entendu, l'invention n'est pas limitée aux modes de réalisation qui viennent d'être décrits à titre d'exemple, mais en couvre toutes les variantes. Ainsi, l'ouverture 30 du dispositif 14 peut, dans certains cas être également obturée par une porte dont l'ouverture est commandée simultanément à celle de la porte 44, par le déplacement de la pièce 56.

## Revendications

1. Dispositif formant vanne, pour le raccordement étanche d'un conteneur amovible (10) sur un conteneur fixe (12), comprenant
un caisson étanche (28) apte à être fixé sur le conteneur fixe (12), pour communiquer avec lui par une première ouverture (30), le caisson présentant une deuxième ouverture (32) située en vis-à-vis de la première ouverture, délimitée par une bride (36) et normalement obturée par une porte de caisson (44), caractérisé en ce que :
- ladite bride et ladite porte sont aptes à coopérer par des moyens de raccordement (42,46) avec une bride (22) et une porte (26) du conteneur amovible (10), pour former un système de transfert étanche à double porte ; et en ce qu'il comporte
- un chariot (48) logé dans le caisson étanche (28) et supportant la porte de caisson (44) ;
- des moyens (58) pour commander un déplacement à la fois de la porte de caisson (44) et de la porte (26) du conteneur amovible par rapport au chariot (48), parallèlement à l'axe des portes, entre une position fermée et une position ouverte ; et
- des moyens (50) pour déplacer le chariot (48) dans le caisson étanche (28) entre une première position dans laquelle lesdités portes (26,44) sont placées en face de la deuxième ouverture (32) et une deuxième position dans laquelle ces portes sont effacées par rapport à la deuxième ouverture, lorsque lesdites portes sont en position ouverte.

2. Dispositif selon la revendication 1, appliqué au transfert d'un produit fluide entre les conteneurs fixe (12) et mobile (10), caractérisé par le fait que le chariot (48) supporte de plus une canalisation extensible (66) munie de moyens (72) de commande d'allongement et de rétraction, cette canalisation étant alignée avec lesdites ouvertures (30,32) lorsque le chariot occupe sa deuxième position.

3. Dispositif selon la revendication 2, caractérisé par le fait qu'il comprend un circuit de commande automatique (75), actionnant successivement les moyens (58) pour commander un déplacement de la porte (44) par rapport au chariot (48), les moyens pour déplacer le chariot (48) dans le caisson (28), et les moyens (72) de commande d'allongement de la canalisation extensible (66).

4. Dispositif selon l'une quelconque des revendications précédentes, caractérisé par le fait que les moyens pour commander un déplacement de la porte parallèlement à son axe comprennent une pièce mobile (56) portée par le chariot (48) et coopérant avec la porte de caisson (44) par un système de cames (62), des moyens de guidage (54) de la porte de caisson parallèlement à un axe commun auxdites ouvertures, et des moyens (58) pour déplacer ladite pièce par rapport au chariot, de façon à engendrer un déplacement de la porte le long des moyens de guidage, par l'intermédiaire du système de cames.

5. Dispositif selon l'une quelconque des revendications précédentes, caractérisé par le fait qu'il comprend un adaptateur (86,104) prévu pour être fixé sur un conteneur amovible (12,10′) destiné à être raccordé sur la deuxième ouverture (32), cet adaptateur comportant une bride tournante (92,114), et une porte de conteneur (100,112), aptes à coopérer avec les moyens de raccordement (42,46) de la bride (36) et de la porte (44) du caisson étanche (28).

6. Conteneur de transport prévu pour être accouplé à un dispositif de raccordement selon la revendication 1, caractérisé par le fait qu'il comprend une enveloppe extérieure (124) pourvue d'une bride de conteneur (128) délimitant une ouverture de conteneur normalement obturée par une porte de conteneur (130), et aptes à coopérer avec les moyens de raccordement (42,46) de la bride (36) et de la porte (44) du caisson étanche (28) le conteneur de transport comprenant de plus une enveloppe intérieure comprenant une partie tubulaire (134) adjacente à l'ouverture de conteneur, et des moyens (136) pour déplacer l'enveloppe intérieure (132) à l'intérieur de l'enveloppe extérieure (124), entre une position effacée dans laquelle la porte de conteneur peut être fermée, et une position de transfert, dans laquelle la partie tubulaire (134) relie les deux ouvertures (30,32) du dispositif de raccordement étanche.

## Claims

1. Device that forms a valve, far the moisture proof attachment of a removable container (10) onto a fixed container (12), comprising:
- a moisture proof coffer (28) capable of being affixed onto the fixed container (12), to communicate with it through a first opening (30), a coffer providing a second opening (32) located directly in front of the first opening, defined by a flange (36) and normally covered by a door (44) to the coffer, characterized in that the said flange and the said door are capable of interacting by means of attachment (42,46) with a flange (22) and a door (26) of the removable container (10), so as to form a double door, moisture proof transfer system, and in that it incorporates:
- a carriage (48) located in the dry coffer (28), which also supports the door (44) of the coffer;
- means (58) for controlling a displacement both of the coffer door (44) and the detachable container door (26) with respect to the carriage (48), parallel to the axis of the doors, between a closed position and an open position; and
a means (50) for moving the carriage (48) inside the dry coffer (28) between the first position where the doors (26,44) are placed in front of the second opening (32) and a second position in which said doors are covered over with respect to the second opening, while said doors are in the open position.

2. Device pursuant to claim 1, which is applied to the transfer of a fluid product between the fixed (12) and mobile (10) containers, characterized in that the carriage (48) also supports a telescoping transfer duct (66) equipped with a means (72) to activate it extension and retraction, this transfer duct being aligned with said openings (30,32) when the carriage occupies the second position.

3. Device pursuant to claim 2, characterized in that it comprises an automatic control circuit (75), which actuates successively the means (58) for controlling the movement of the door (44) with respect to the carriage (48), the means for moving the carriage (48) in the coffer (28), and the means (72) for controlling the extension of the telescoping transfer duct (66).

4. Device pursuant to any one of the preceding claims, characterized in that the means for controlling the movement of the door parallel to its axis consisting of a mobile piece (56) carried on the carriage (48) and interacting with the door (44) of the coffer through a system of cams (62), mechanisms (54) for the guidance of the coffer door in a direction parallel to an axis that is common to that of the openings, and a means (58) for moving the said piece with respect to the sliding carriage in a fashion so as to initiate a displacement of the door for the length of the guides, through the inter mediation of a system of cams.

5. Device pursuant to any one of the preceding claims, characterized by an adapter (86,104) designed so as to be affixed onto a removable container (12,10') destined to be attached to the second opening (32), this adapter being comprised of a rotating flange (92,114), and a container door (100,112), capable of interacting with the attachment mechanism (42,46) of the flange (36) and of the door (44) to the dry coffer (28).

6. Transport container designed so as to be coupled to a moisture proof attachment device according to claim 1, characterized in that it comprises:
- an exterior envelope (124) designed with a container flange (128) which defines an opening for the container which is normally covered by a cover (130) of the container, and is capable of interacting with the attachment means (42,46) of the flange (36) and of the door (44) of the moisture proof coffer (28), said container also comprising:
- an interior envelope consisting of a tubular portion (134) adjacent to the opening of the container; and
- means (136) for displacing the interior envelope (132) which is on the interior of the exterior envelope (124), in between a position that is concealed in which the door of the container can be closed, and a transfer position, in which the tubular portion (134) connects the two openings (30,32) of the moisture proof attachment device.

## Patentansprüche

1. Ventilähnliche Vorrichtung zur Herstellung einer dichten Verbindung zwischen einem beweglichen Behälter (10) und einem fest angebrachten Behälter (12), die einen dichten Kasten (28) umfaßt, der an dem fest angebrachten Behälter (12) befestigt werden kann, wodurch über eine erste Öffnung (30) eine Verbindung zu dem Behälter hergestellt wird, wobei der Kasten über eine zweite Öffnung (32) verfügt, die sich gegenüber der ersten Öffnung befindet und durch einen Flansch (36) gebildet wird, sowie normalerweise durch eine Kastentür (44) verschlossen ist; dadurch gekennzeichnet, daß
- der genannte Flansch und die genannte Tür über die Verbindungsvorrichtungen (42, 46) mit einem Flansch (22) und einer Tür (26) am beweglichen Behälter (10) in Verbindung stehen, wodurch ein zweitüriges, dichtes Austauschsystem gebildet wird; und dadurch gekennzeichnet, daß sie folgende Teile umfaßt:
- einen Wagen (48), der sich in dem dichten Kasten (28) befindet und durch den die Kastentür (44) gehalten wird;
- eine Vorrichtung (58) zur gleichzeitigen Verschiebung der Kastentür (44) und der Tür (26) des beweglichen Behälters in bezug auf die Position des Wagens (48), wobei die Verschiebung parallel zur Achse der Türen zwischen einer geschlossenen und einer geöffneten Position erfolgt; und
- eine Vorrichtung (50) zur Verschiebung des Wagens (48) in dem dichten Kasten (28) zwischen einer ersten Position, in der sich die genannten Türen (26, 44) gegenüber der zweiten Öffnung (32) befinden, und einer zweiten Position, in der sich die Türen nicht mehr gegenüber der zweiten Öffnung befinden, wenn die genannten Türen geöffnet sind.

2. Vorrichtung nach Anspruch 1, die zum Austausch einer Flüssigkeit zwischen dem fest angebrachten Behälter (12) und dem beweglichen Behälter (10) verwendet wird; dadurch gekennzeichnet, daß sich der Wagen (48) auch mit einem ausziehbaren Rohr (66) im Eingriff befindet, das über eine Vorrichtung (72) zum Aus- und Zusammenziehen verfügt, wobei das Rohr mit den genannten Öffnungen (30, 32) ausgerichtet wird, wenn der Wagen seine zweite Position einnimmt.

3. Vorrichtung nach Anspruch 2, dadurch gekennzeichnet, daß sie über eine automatische Steuerschaltung (75) verfügt, durch die die folgenden Vorrichtungen nacheinander betätigt werden: die Vorrichtung (58) zum Verschieben der Tür (44) in bezug auf den Wagen (48), die Vorrichtung zum Verschieben des Wagens (48) im Kasten (28) und die Vorrichtung (72) zum Ausziehen des ausziehbaren Rohres (66).

4. Vorrichtung nach einem der genannten Ansprüche, dadurch gekennzeichnet, daß die Vorrichtung, mit der die Tür parallel zur deren Achse verschoben wird, folgende Teile umfaßt: ein bewegliches Teil (56), das am Wagen (48) befestigt ist und über ein Nockensystem (62) mit der Kastentür (44) in Verbindung steht, eine Führungsvorrichtung (54) an der Kastentür, die parallel zu einer durch die genannten Öffnungen gebildeten Achse verläuft, und eine Vorrichtung (58), mit der das genannte Teil in bezug auf den Wagen verschoben wird, wodurch mit Hilfe des Nockensystems eine Verschiebung der Tür entlang der Führungsvorrichtung ausgelöst wird.

5. Vorrichtung nach einem der genannten Ansprüche, dadurch gekennzeichnet, daß sie einen Adapter (86, 104) umfaßt, der an dem beweglichen Behälter (12, 10') befestigt und an die zweite Öffnung (32) angeschlossen wird, wobei dieser Adapter einen Losflansch (92, 114) sowie eine Behältertür (100, 112) umfaßt, die dazu geeignet sind, zu den Verbindungsvorrichtungen (42, 46) des Flansches (36) und der Tür (44) des dichten Kastens (28) eine Verbindung herzustellen.

6. Transportbehälter, der an eine Verbindungsvorrichtung nach Anspruch 1 angeschlossen werden kann, dadurch gekennzeichnet, daß er eine Außenwand (124) umfaßt, die mit einem Behälterflansch (128) versehen ist, durch den am Behälter eine Öffnung gebildet wird, die im Normalzustand durch eine Behältertür verschlossen ist, dazu geeignet, zu den Verbindungsvorrichtungen (42, 46) des Flansches (36) und der Tür (44) des dichten Kastens (28) eine Verbindung herzustellen, wobei der Transportbehälter darüber hinaus folgende Teile umfaßt: eine Innenwand, die mit einem Rohrstück (134) versehen ist, das an der Behalteröffnung anliegt, sowie eine Vorrichtung (136), mit der die Innenwand (132) innerhalb der Außenwand (124) zwischen einer Position, in der die Behältertür geschlossen werden kann, und einer Austauschposition, in der das Rohrstück (134) die beiden Öffnungen (30, 32) der Verschlußvorrichtung verbindet, bewegt werden kann.
